# EUROPÄISCHE PATENTSCHRIFT

(11) **EP 1 549 869 B1**
(45) Veröffentlichungstag und Bekanntmachung des Hinweises auf die Patenterteilung: **10.05.2006**
(21) Anmeldenummer: 03773497.7
(22) Anmeldetag: 07.10.2003
(51) Int. Cl.: F16K 17/04

(54) **DRUCKBEGRENZUNGSVENTIL**
PRESSURE LIMITING VALVE
SOUPAPE DE LIMITATION DE PRESSION

(30) Priorität: 08.10.2002 DE 10246787
(43) Veröffentlichungstag der Anmeldung: 06.07.2005
(73) Patentinhaber: Bosch Rexroth AG, 70184 Stuttgart (DE)
(72) Erfinder: WILHELM, Michael, 71655 Vaihingen / Enz (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2003/003318
(87) Internationale Veröffentlichungsnummer: WO 2004/033943

(56) Entgegenhaltungen:
- WO-A-01/51835
- FR-A- 2 083 655
- FR-A- 2 264 462
- GB-A- 694 662
- US-A- 4 616 672
- US-A- 5 871 109

## Beschreibung

Die Erfindung betrifft ein Druckbegrenzungsventil gemäß dem Oberbegriff des Patentanspruchs 1, der in US 5 871 109 offenbart ist.

Druckbegrenzungsventile dienen zur Begrenzung eines Systemdruckes. Sie können als direkt gesteuerte Sitzventile ausgeführt sein. Andere Ausführungen sind Schieberventile oder Tellerventile. Auch diese können prinzipiell mit der hier angemeldeten Form der Dämpfung schwingungsgedämpft werden, wenn sie direkt gesteuert sind. Weiterhin ist noch die vorgesteuerte Ausführung möglich. Bei Überschreiten eines voreingestellten Maximaldruckes wird über das Druckbegrenzungsventil eine Verbindung von einem Druckanschluß zu einem Rücklaufanschluß aufgesteuert. Im einfachsten Fall sind die Druckbegrenzungsventile direkt gesteuert und somit sehr einfach im Aufbau und kostengünstig herstellbar. Derartige direkt gesteuerte Druckbegrenzungsventile weisen eine hohe Öffnungsdynamik auf, so dass Druckspitzen im System sehr schnell abgebaut werden können. Ein Nachteil dieser Druckbegrenzungsventile ist jedoch, dass diese aufgrund ihrer Öffnungsdynamik bei Druckschwankungen sehr schwingungsanfällig sind. Die aufgrund hydraulischer Anregungen schwingenden Ventilkörper können zu einer erheblichen Geräuschbelastung und in ungünstigen Fällen zur Zerstörung eines zugeordneten Ventilsitzes oder der in Schließrichtung wirksamen Feder führen.

Zur Dämpfung dieser Schwingungen werden Druckbegrenzungsventile mit Dämpfungseinrichtungen versehen, wie sie beispielsweise im Bosch-Rexroth-Datenblatt RC 25 402/08.97 beschrieben sind.

Bei dieser bekannten Lösung ist dem Ventilkörper druckanschlußseitig ein Dämpfungskolben zugeordnet, der mit einer stirnseitig aufgesetzten Dämpfungshülse einen Dämpfungsspalt begrenzt, über den ein Dämpfungsraum mit einem ventilsitzseitigen Raum verbunden ist. Bei Axialbewegungen des Ventilkörpers wird das Volumen des Dämpfungsraums verändert, so dass Druckmittel aus diesem heraus oder in diesen einströmen muß. Dieser Druckmittelvolumenausgleich wird durch die Drosselwirkung im Dämpfungsspalt behindert, wobei Bewegungsenergie des Ventilkörpers und des Dämpfungskolbens in Wärme umgewandelt und so die Axialverschiebung des Ventilkörpers abgebremst und gedämpft wird.

Nachteilig an dieser bekannten Lösung ist, dass der axiale Bauraum des Druckbegrenzungsventils durch den druckanschlußseitig angesetzten Dämpfungsraum mit dem darin angeordneten Dämpfungskolben vergrößert ist. Desweiteren ist ein vergleichsweise großer fertigungstechnischer Aufwand bei der Herstellung erforderlich, da der Druckanschluß über schwierig zu fertigende Schrägbohrungen ausgebildet werden muß.

Als alternative Lösung kann man anstelle einer druckanschlußseitigen Dämpfungseinrichtung auch eine rücklaufseitige Dämpfungseinrichtung vorsehen, bei der ein Dämpfungsraum mit Druckmittel gefüllt und über den Dämpfungsspalt mit dem Rücklaufanschluß verbunden ist. Bei Axialverschiebungen eines mit dem Ventilkörper verbundenen Dämpfungskolbens wird Druckmittel über den Dämpfungsspalt aus dem Dämpfungsraum verdrängt oder in diesen hineingefördert, so dass die Axialbewegungen des Ventilkörpers gedämpft werden.

Nachteilig bei dieser rücklaufseitigen Niederdruckdämpfung ist, dass stets eine 100 %ige Druckmittelbefüllung des Dämpfungsraum sichergestellt werden muß. Diese Befüllung ist bei der Montage des Ventils nur mit vergleichsweise hohem Aufwand durchzuführen. Falls Luftblasen im Dämpfungsraum verbleiben, setzen diese die Dämpfung außer Kraft. Durch die Verbindung mit dem Rücklaufanschluß kann ein Lufteintritt über den Dämpfungsspalt nicht ausgeschlossen werden. Diese Gefahr ist besonders groß, wenn die Rücklaufleitung sich vollständig entleeren kann oder wenn beim Übergang vom Hoch- zum Niederdruck im Druckmittel gelöste Luft ausperlt.

Demgegenüber liegt der Erfindung die Aufgabe zugrunde, ein Druckbegrenzungsventil zu schaffen, bei dem die Dämpfungswirkung verbessert ist.

Diese Aufgabe wird durch ein Druckbegrenzungsventil mit den Merkmalen des Patentanspruchs 1 gelöst.

Erfindungsgemäß hat das Druckbegrenzungsventil einen rücklaufseitig ausgebildeten Dämpfungsraum, der mit Hochdruck, d.h. etwa dem Druck am Druckanschluß beaufschlagt ist. Unter rücklaufseitigen Dämpfungsraum wird dabei ein Dämpfungsraum verstanden, der in dem vom Druckanschluß entfernten Bereich einer Büchse des Druckbegrenzungsventils angeordnet ist.

Die erfindungsgemäß Lösung hat den Vorteil, dass kein zusätzlicher axialer Bauraum für den Dämpfungsraum bereitgestellt wären muß, so dass das Druckbegrenzungsventil gegenüber der eingangs beschriebenen Lösung mit Hochdruckdämpfung kürzer ausgeführt werden kann. Ein weiterer Vorteil besteht darin, dass durch die Beaufschlagung des Dämpfungsraums mit Hochdruck, die Gefahr des Bildens von Luftblasen im Dämpfungsraum erheblich gegenüber der vorbeschriebenen Niederdruckdämpfung verringert ist, so dass eine zuverlässige Dämpfungswirkung gewährleistet ist.

Das erfindungsgemäß Druckbegrenzungsventil läßt sich sehr einfach montieren, da durch den Anschluß des Dämpfungsraums an den Druckanschluß die Befüllung des Dämpfungsraums sehr einfach ist und keine Dämpfungsraumentlüftung vorgesehen werden muß.

Bei einem bevorzugten Ausführungsbeispiel der Erfindung ist der Dämpfungsraum koaxial zu einem eine Schließfeder aufnehmenden Federraum ausgebildet, so dass auch der radiale Bauraum des Druckbegrenzungsventil minimal ist.

Dabei wird es bevorzugt, wenn der Dämpfungskolben eine Axialbohrung des Ventilkörpers abschnittsweise durchsetzt, die einerseits im Dämpfungsraum und andererseits in einer druckanschlußseitigen Stirnfläche des Ventilkörpers mündet. D.h., bei diesem Ausführungsbeispiel durchsetzt der Dämpfungskolben den Ventilkörper zumindest abschnittsweise, so dass das Druckbegrenzungsventil sehr kurz ausgeführt werden kann.

Der Aufbau läßt sich weiter vereinfachen, wenn ein Endabschnitt des Ventilkörpers dichtend in eine Dämpfungshülse eintaucht, die ihrerseits vom Dämpfungskolben durchsetzt ist und die gemeinsam mit der benachbarten Stirnfläche des Ventilkörpers den Dämpfungsraum stirnseitig und radial begrenzt.

Bei dieser Variante wird es bevorzugt, wenn der Ventilkörper einen radial zurückgesetzt rücklaufseitigen Axialvorsprung hat, der in die Dämpfungshülse eintaucht.

Vorteilhafter Weise durchsetzt der Dämpfungskolben einen Boden der Dämpfungshülse, wobei Dämpfungshülse und Dämpfungskolben an einer Einstellschraube abgestützt sind, deren Einschraubtiefe in eine Büchse des Druckbegrenzungsventils veränderbar ist.

Die den Ventilkörper in Schließrichtung beaufschlagende Schließfeder umgreift bei einem bevorzugten Ausführungsbeispiel die Dämpfungshülse und ist ebenfalls an der Einstellschraube abgestützt.

Der Ventilkörper hat an seinem druckanschlussseitigen Endabschnitt einen radial zurückgesetzten Zapfen, welcher zur axialn Führung des Ventilkörpers dient. IN diesem Zapfen mündet die Axialbohrung, über die die Druckmittelzufuhr zum Dämpfungsraum gewährleistet wird. In diesem Zapfen sind Längsnuten ausgebildet, über die Druckmittel vom Druckanschluß zum Ventilsitz geführt wird.

Sonstige vorteilhafte Weiterbildungen der Erfindung sind Gegenstand der weiteren Unteransprüche.

Im folgenden wird ein bevorzugtes Ausführungsbeispiel der Erfindung anhand einer schematischen Zeichnung näher erläutert.

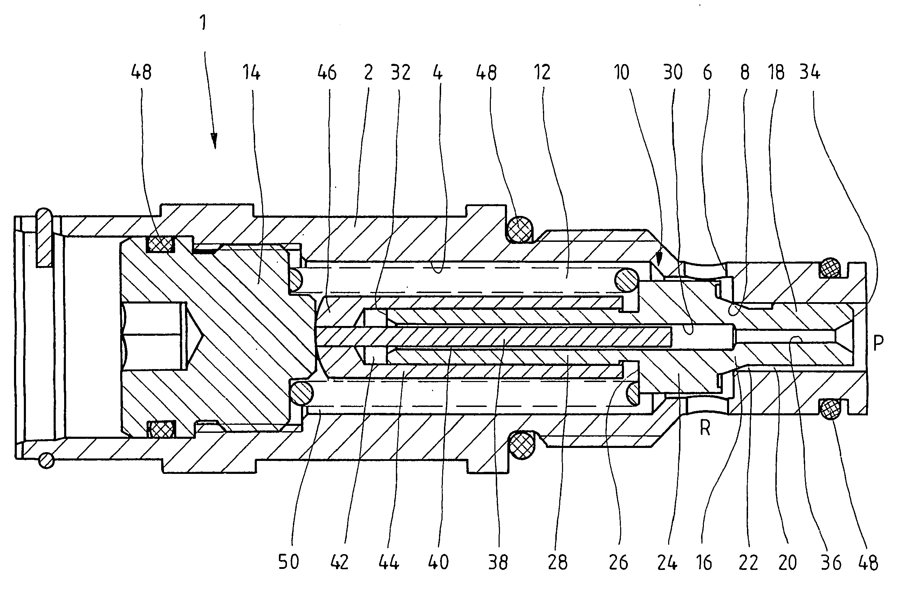

Die einzige Zeichnung zeigt einen Längsschnitt durch ein erfindungsgemäßes Druckbegrenzungsventil.

Das Druckbegrenzungsventil 1 hat eine Büchse 2, deren Ventilbohrung 4 in der Darstellung von links nach rechts zurückgestuft ist. Die rechte stirnseitige Mündung der Ventilbohrung 4 bildet einen Druckanschluß P aus, während ein Rücklaufanschluß R durch einen radial in die Ventilbohrung 4 einmündenden Bohrungsstern 6 gebildet ist.

Im Bereich zwischen dem Rücklaufanschluß R und dem Druckanschluß P bildet eine Radialstufe der Ventilbohrung 4 einen Ventilsitz 8 aus, gegen den ein Ventilkörper 10 mittels einer Schließfeder 12 vorgespannt ist.

Der in der Figur linke Endabschnitt der Ventilbohrung 4 ist mittels einer Einstellschraube 14 verschlossen, die in einen radial erweiterten Abschnitt der Ventilbohrung 4 eingeschraubt ist. Die Schließfeder 12 ist an der Einstellschraube 14 abgestützt, so dass durch Veränderung der Einschraubtiefe die Vorspannung der Schließfeder 12 und somit der einstellbare maximale Systemdruck veränderbar ist.

Der dargestellte Ventilkörper 10 hat einen auf dem Ventilsitz 8 aufsitzenden Ventilkegel 16, der in einen frontseitigen Zapfen 18 übergeht. Am Außenumfang dieses Zapfens sind eine Vielzahl von Längsnuten 20 ausgebildet, über die der Druckanschluß P hydraulisch mit einem ventilsitzseitigen Druckraum 22 verbunden ist.

Der in der Figur linke Endabschnitt des Ventilkegels 16 geht über eine Radialschulter in einen Bund 24 über, an dessen hinterer Ringfläche 26 die Schließfeder 12 angreift.

Über diese Ringfläche 26 ist der Ventilkörper 10 zu einem rücklaufseitigen Axialvorsprung 28 zurückgestuft. Der Ventilkörper 10 wird von einer Axialbohrung 30 durchsetzt, die einerseits in der linken Ringstirnfläche 32 des Axialvorsprungs 28 und andererseits in der Stirnfläche 34 des Zapfens 18 mündet. Die Axialbohrung 30 ist im Bereich des Zapfens 18 radial zu einem Endabschnitt 36 zurückgestuft, der trichterförmig in der Stirnfläche 34 mündet.

An der Einstellschraube 14 ist desweiteren ein Dämpfungskolben 38 abgestützt, dessen freier Endabschnitt in die Axialbohrung 30 eintaucht. Das Spiel zwischen dem gehäusefest abgestützten Dämpfungskolben 38 und der Axialbohrung 30 ist so ausgelegt, dass ein Dämpfungsspalt 40 ausgebildet wird, der eine gedrosselte Druckmittelströmung zwischen dem rechten druckanschlußseitigen Abschnitt der Axialbohrung 30 und einem rückwärtigen Dämpfungsraum 42 ermöglicht. Die radiale und linke stirnseitige Begrenzung des Druckraums 42 erfolgt über eine Dämpfungshülse 44, in die der Axialvorsprung 28 des Ventilkörpers 10 dichtend eintaucht. Die Dämpfungshülse 44 ist über einen Boden 46 an der Einstellschraube 14 abgestützt, wobei der Dämpfungskolben 38 den Boden 46 durchsetzt. Somit ist der Dämpfungsraum 42 über den Dämpfungsspalt 44 und den rechten Teil der Axialbohrung 30 und deren Endabschnitt 36 mit dem Druckanschluß P verbunden, so dass dieser Dämpfungsraum 42 mit Hochdruck beaufschlagt ist. Bei einer Öffnungsbewegung des Ventilkörpers 10 wird das Volumen des Dämpfungsraums 42 verkleinert, so dass Druckmittel über den Dämpfungsspalt 40 hin zum Druckanschluß P strömen muß, um eine Axialverschiebung des Ventilkörpers 10 zu ermöglichen.

Diese Druckmittelströmung wird durch die Drosselwirkung im Dämpfungsspalt behindert, so dass die Öffnungsbewegung des Ventilkörpers 10 gedämpft ist. Bei einer Rückbewegung des Ventilkörpers 10 in Schließrichtung wird entsprechend Druckmittel vom Druckanschluß P in den Dämpfungsraum 42 zurückgefördert, so dass auch die Schließbewegung gedrosselt erfolgt. Der besondere Vorteil dieser Lösung besteht darin, dass zum Einen nur ein minimaler axialer und radialer Bauraum für die Dämpfungseinrichtung erforderlich ist, da der ohnehin vorhandene Federraum 50 zur Aufnahme der Dämpfungseinrichtung genutzt wird. Da der Dämpfungsraum 42 stets mit Hochdruck beaufschlagt ist, kann ein Lufteintritt im Betrieb des Druckbegrenzungsventils nahezu ausgeschlossen werden. Ein weiterer Vorteil der erfindungsgemäßen Konstruktion ist darin zu sehen, dass durch die Hochdruckbeaufschlagung der Ringstirnfläche 32 des Ventilkörpers 10 eine Druckkraftkomponente in Schließrichtung wirkt, so dass durch den teilweisen Druckausgleich die Schließfeder 12 mit einer geringeren Federrate ausgelegt werden kann, als dies bei herkömmlichen Lösungen der Fall ist. Es stellt sich somit eine günstigere, flache Federkennlinie ein.

Zur Abdichtung der Büchse 2 in einem Gehäuse sind an deren Außenumfang sowie am Außenumfang der Einstellschraube 14 einige O-Ring-Dichtungen 48 angeordnet.

Bei dem vorbeschrieben Ausführungsbeispiel ist der Druckanschluß über die Längsnuten 20 am Zapfen 18 mit dem Ventilsitz 8 verbunden. Alternativ könnte man auch den Druckanschluß P über Schrägbohrungen der Büchse 2 ausbilden.

Offenbart ist ein Druckbegrenzungsventil mit einem Ventilkörper, dessen Axialbewegung über eine Dämpfungseinrichtung gedämpft ist. Erfindungsgemäß hat die Dämpfungseinrichtung einen rücklaufseitig ausgebildeten Dämpfungsraum, der mit dem an einem Druckanschluß wirksamen Systemdruck beaufschlagt ist.

### Bezugszeichenliste

- 1: Druckbegrenzungsventil
- 2: Büchse
- 4: Ventilbohrung
- 6: Bohrungsstern
- 8: Ventilsitz
- 10: Ventilkörper
- 12: Schließfeder
- 14: Einstellschraube
- 16: Ventilkegel
- 18: Zapfen
- 20: Längsnut
- 22: Druckraum
- 24: Bund
- 26: Ringfläche
- 28: Axialvorsprung
- 30: Axialbohrung
- 32: Ringstirnfläche
- 34: Stirnfläche
- 36: Endabschnitt
- 38: Dämpfungskolben
- 40: Dämpfungsspalt
- 42: Dämpungsraum
- 44: Dämpfungshülse
- 46: Boden
- 48: O-Ring-Dichtung
- 50: Federraum

## Patentansprüche

1. Druckbegrenzungsventil mit einem in eine Schließstellung vorgespannten Ventilkörper (10), über den eine Verbindung zwischen einem Druckanschluss (P) mit einem Rücklaufanschluss (R) aufsteuerbar ist und dem zur Dämpfung der Ventilkörperbewegung eine Dämpfungseinrichtung mit einem einen Dämpfungsraum (42), begrenzenden Dämpfungskolben (38) zugeordnet ist, wobei der Dämpfungsraum (42) rücklaufseitig ausgebildet und mit dem Druckanschluss (P) verbunden ist, **dadurch gekennzeichnet, dass** der Dämpfungskolben (38) eine Axialbohrung (30) des ventilkörpers (10) abschnittsweise durchsetzt, die einerseits im Dämpfungsraum (42) und andererseits in einer druckanschlussseitigen Stirnfläche (34) des ventilkörpers (10) mündet.

2. Druckbegrenzungsventil nach Patentanspruch 1, wobei der Dämpfungsraum (42) koaxial zu einem eine Schließfeder (12) aufnehmenden Federraum (50) ausgebildet ist.

3. Druckbegrenzungsventil nach Patentanspruch 2, wobei der Ventilkörper (10) dichtend in eine Dämpfungshülse (44) eintaucht, die vom Dämpfungskolben (38) abschnittsweise durchsetzt ist und die einen stirnseitigen Abschluß des Dämpfungsraums (42) bildet.

4. Druckbegrenzungsventil nach Patentanspruch 3, wobei der Ventilkörper einen radial zurückgesetzten, rücklaufseitigen Axialvorsprung (28) hat, der in die Dämpfungshülse (44) eintaucht.

5. Druckbegrenzungsventil nach Patentanspruch 3 oder 4, wobei der Dämpfungskolben(38) einen Boden (46) der Dämpfungshülse (44) durchsetzt.

6. Druckbegrenzungsventil nach einem der Patentansprüche 3 bis 5, wobei die Dämpfungshülse (44) und/oder der Dämpfungskolben (38) an einer Einstellschraube (14) abgestützt sind.

7. Druckbegrenzungsventil nach Patentanspruch 2 und einem der Patentansprüche 3 bis 6, wobei die Schließfeder (12) die Dämpfungshülse (44) umgreift.

8. Druckbegrenzungsventil nach einem der Patentansprüche 2 bis 7, wobei der Ventilkörper (10) einen druckanschlußseitigen, radial zurückgesetzten Zapfen (18) hat, in dessen Bereich die Axialbohrung (36) zurückgestuft ist.

9. Druckbegrenzungsventil nach Patentanspruch 8, wobei der Zapfen (18) an seinem Außenumfang Längsnuten (2) hat, über die der Druckanschluß (P) hydraulisch mit dem Ventilsitz (8) verbunden ist.

## Claims

1. Pressure limiting valve, comprising a valve body (10) biased into a closed position, whereby a connection between a pressure port (P) and a return port (R) may be controlled open, and to which a damping device which includes a damping piston (38) defining a damping chamber (42) is associated for damping the valve body movement, wherein the damping chamber (42) is formed on the return side and connected with the pressure port (P), **characterized in that** the damping piston (38) extends in portions thereof through an axial bore (30) of the valve body (10), that opens into the damping chamber (42) on the one hand and into a pressure port-side end face (34) of the valve body (10) on the other side..

2. The pressure limiting valve in accordance with claim 1, wherein the damping chamber (42) is formed coaxial with a spring chamber (50) accommodating a closing spring (12).

3. The pressure limiting valve in accordance with claim 2, wherein the valve body (10) sealingly plunges into a damping sleeve (44) through which the damping piston (38) extends in portions thereof, and which forms an end-side termination of the damping chamber (42).

4. The pressure limiting valve in accordance with claim 3, wherein the valve body includes a radially recessed, return-side axial protrusion (28) which plunges into the damping sleeve (44).

5. The pressure limiting valve in accordance with claim 3 or 4, wherein the damping piston (38) extends through a bottom (46) of the damping sleeve (44).

6. The pressure limiting valve in accordance with any one of claims 3 to 5, wherein the damping sleeve (44) and/or the damping piston (38) are supported on a set screw (14).

7. The pressure limiting valve in accordance with claim 2 and any one of claims 3 to 6, wherein the closing spring (12) encompasses the damping sleeve (44).

8. The pressure limiting valve in accordance with any one of claims 2 to 7, wherein the valve body (10) includes a pressure port-side, radially recessed pin (18), in the range of which the axial bore (36) is stepped back.

9. The pressure limiting valve in accordance with claim 8, wherein the pin (18) has at its outer circumference longitudinal grooves (2) whereby the pressure port (P) is hydraulically connected with the valve seat (8).

## Revendications

1. Soupape de limitation de pression avec un corps de soupape (10) pré-serré dans une position de fermeture, au moyen duquel peut être commandée une connexion entre un raccord de pression (P) et un raccord de retour (R) et auquel est affecté un dispositif d'amortissement avec un piston d'amortissement (38) limitant une chambre d'amortissement (42) pour l'amortissement de déplacement du corps de soupape, la chambre d'amortissement (42) étant formée sur le côté de retour et étant reliée au raccord de pression (P), **caractérisée en ce que** le piston d'amortissement (38) traverse partiellement un alésage axial (30) du corps de soupape (10), lequel débouche par une extrémité dans la chambre d'amortissement (42) et par l'autre extrémité dans une surface frontale (34) du corps de soupape (10), côté raccord de pression.

2. Soupape de limitation de pression selon la revendication 1, dans laquelle la chambre d'amortissement (42) est formée coaxialement à une chambre de ressort (50) où est logé un ressort de fermeture (12).

3. Soupape de limitation de pression selon la revendication 2, dans laquelle le corps de soupape (10) plonge sans joint dans une douille d'amortissement (44) partiellement traversée par le piston d'amortissement (38) et formant une terminaison frontale de la chambre d'amortissement (42).

4. Soupape de limitation de pression selon la revendication 3, dans laquelle le corps de soupape présente une saillie axiale (28) radialement rentrante côté retour, laquelle plonge dans la douille d'amortissement (44).

5. Soupape de limitation de pression selon la revendication 3 ou 4, dans laquelle le piston d'amortissement (38) traverse un fond (46) de la douille d'amortissement (44).

6. Soupape de limitation de pression selon l'une des revendications 3 à 5, dans laquelle la douille d'amortissement (44) et/ou le piston d'amortissement (38) prennent appui sur une vis de réglage (14).

7. Soupape de limitation de pression selon la revendication 2 et l'une des revendications 3 à 6, dans laquelle le ressort de fermeture (12) enserre la douille d'amortissement (44).

8. Soupape de limitation de pression selon l'une des revendications 2 à 7, dans laquelle le corps de soupape (10) présente un tenon (18) radialement rentrant côté raccord de pression, au niveau duquel l'alésage axial (36) est rétréci.

9. Soupape de limitation de pression selon la revendication 8, dans laquelle le tenon (18) présente des rainures longitudinales (2) sur sa circonférence extérieure, grâce auxquelles est réalisée une liaison hydraulique du raccord de pression (P) avec le siège de soupape (8).
